# EUROPEAN PATENT SPECIFICATION

(11) **EP 2 305 883 B1**
(45) Date of publication and mention of the grant of the patent: **07.05.2014**
(21) Application number: 10181074.5
(22) Date of filing: 15.03.2006
(51) Int. Cl.: D21F 7/08

(54) **Papermaker's press felt with long machine direction floats in base fabric**
Papiermaschinenpressfilz mit langen Längsflottierungen im Grundgewebe
Feutre de presse d'une machine à papier comportant un tissu de base dont les fils sens machine forment de longs flottés

(30) Priority: 21.03.2005 US 84899; 31.03.2005 US 95008
(43) Date of publication of application: 06.04.2011
(62) Divisional of application: 06005308.9
(73) Proprietor: HUYCK.WANGNER Austria GmbH, 2640 Gloggnitz (AT)
(72) Inventor: Gstrein, Hippolit, 2640 Gloggnitz (AT); Haiden, Klaus, 2620 Neunkirchen (AT)
(74) Representative: Popp, Eugen

(56) References cited:
- EP-A1- 0 697 482
- WO-A-93/01350

## Description

### Field of the Invention

The present invention relates generally to papermaking, and more particularly to fabrics used in papermaking.

### Background of the Intention

In the conventional fourdrinier papermaking process, a water slurry or suspension of cellulosic fibers (known as the paper "stock") is fed onto the top of the upper run of an endless belt of woven wire and/or synthetic material that travels between two or more rollers. The belt, often referred to as a "forming fabric," provides a papermaking surface on the upper surface of its upper run which operates as a filter to separate the cellulosic fibers of the paper stock from the aqueous medium, thereby forming a wet paper web. The aqueous medium drains through mesh openings of the forming fabric, known as drainage holes, by gravity alone or with assistance from one or more suction boxes located on the lower surface (i.e., the "machine side") of the upper run of the fabric.

After leaving the forming section, the paper web is transferred to a press section of the paper machine, in which it is passed through the nips of one or more pairs of press rolls covered with another fabric, typically referred to as a "press felt." Pressure from the rolls removes additional moisture from the web; the moisture removal is often enhanced by the presence of a "batt" layer on the press felt. The paper is then conveyed to a drier section for further moisture removal. After drying, the paper is ready for secondary processing and packaging.

Press felts typically include one or more base fabric layers along with one or more batt layers. The base fabrics can be single or multilayer designs, although recently conventional fabrics have often been replaced with laminated fabric designs, which can include, for example, a fine top fabric for enhanced pressure transfer uniformity and a more open bottom fabric design for improved dewatering. Most commonly, laminated base fabrics comprise two single layer fabrics needled together, although double layer fabrics may also be used. Even three or more fabric layers may be employed in some fabrics (see, e.g., U.S. Patent No. 5,277,967 to Zehle et al.). These fabrics have typically been woven on 12 and 16 shed patterns such as plain weaves or twills or 6 harness satins. However, these fabrics often suffer from increased start-up time.

Other advances in press felt design have incorporated non-woven base layers. Exemplary of these are spiraled fabrics, such as those described in U.S. Patent No. 6,240,608 and U.S. Patent Publication No. 20040005833. Non-woven fabrics can enjoy as an advantage the absence of a knuckle on the top surface of the fabric that can negatively impact paper marking. However, these fabrics can tend to suffer from hydraulic marking and collapsing under high loadings.

In EP697482, a press fabric for use on the press section of a paper machine having a multilayer structure, and is woven according to techniques normally applied in the weaving of forming fabrics is disclosed. The press fabric is woven from at least one system of warp yarns (24) and two or more layers (10,14,18) of weft yarns (12,16,20,22), with the yarn sizes and weave patterns chosen with a view toward providing the resulting press fabric with a fine paper-contacting surface, and ample void volume. One layer (14) of the two or more layers of weft yarns includes, or is entirely composed of, multicomponent yarns (16) having a plurality of load-bearing members. The multicomponent yarns (16) may be multifilament or multistrand yarns composed of fine filaments, or may be polyurethane-coated monofilament yarns, and provide the press fabrics with a compressible and resilient structure. The multifilament or multistrand yarns may also be polyurethane-coated.

In WO93/01350, a dewatering fabric for the press section of a paper making machine is described. The fabric includes at least two distinct layers of flattened monofilament warp yarns at a high fill factor, and at least one layer of weft yarns.

In view of the foregoing, it would be desirable to provide a base fabric for a press felt that overcomes some of the shortcomings of spiraled fabrics at a lower start-up period than a laminated base fabric.

### Summary of the Invention

The present invention provides a papermaker's press felt according to claim 1, and a method of producing a papermaker's felt according to claim 6. Further embodiments of the invention are realised according to the corresponding dependent claims.

### Brief Description of the Figures

Figure 1 is a schematic diagram illustrating the press section of a papermaking machine that may employ a press felt according to embodiments of the present invention.
Figure 2 is an exemplary cross-sectional view of a press felt according to example arrangements of the present invention that do not fall within the scope of the claims.
Figure 3 is an exemplary top view of a base fabric of the press felt of Figure 2 that does not fall within the scope of the claims.
Figure 4 is an exemplary top view of the bottom layer of the base fabric of Figure 2 that does not fall within the scope of the claims.
Figures 5A-5L are section views taken along lines 5A-5A through 5L-5L of Figure 3 that do not fall within the scope of the claims.
Figure 6 is a section view of a base fabric according to alternative example arrangement of the present invention that does not fall within the scope of the claims.
Figure 7 is an exemplary section view of a base fabric according to alternative example arrangements of the present invention that do not fall within the scope of the claims.
Figure 8 is an exemplary section view of a base fabric according to alternative example arrangements of the present invention that do not fall within the scope of the claims.
Figure 9 is an exemplary section view of a base fabric according to alternative example arrangements of the present invention that do not fall within the scope of the claims.
Figure 10 is an exemplary section view of a base fabric according to alternative example arrangements of the present invention that do not fall within the scope of the claims.
Figure 11 is an exemplary top view of a triple layer base fabric according to alternative example arrangements of the invention that do not fall within the scope of the claims.
Figure 12 is a top view of the bottom layer of the fabric of Figure 11 that does not fall within the scope of the claims.
Figure 13 is a section view of the base fabric taken along lines 13-13 of Figure 11 that does not fall within the scope of the claims.
Figure 14 is an exemplary section view of a base fabric according to alternative example arrangements of the present invention that do not fall within the scope of the claims.
Figure 15 is an exemplary section view of a base fabric according to alternative example arrangements of the present invention that do not fall within the scope of the claims.
Figure 16 is a top view of a triple layer base fabric according to embodiments of the invention.
Figure 17 is a top view of the bottom layer of the fabric of Figure 16.
Figure 18 is a section view of the base fabric of Figure 16 taken along lines 18-18 thereof.
Figure 19 is a section view of a base fabric according to alternative embodiments of the present invention.
Figure 20 is an exemplary top view of a triple layer base fabric according to alternative example arrangements of the invention that do not fall within the scope of the claims.
Figure 21 is a top view of the bottom layer of the fabric of Figure 20 that does not fall within the scope of the claims.
Figure 22 is a section view of the base fabric of Figure 20 taken along lines 22-22 thereof that does not fall within the scope of the claims.
Figure 23 is an exemplary section view of a base fabric according to alternative example arrangements of the present invention that do not fall within the scope of the claims.
Figure 24 is an exemplary section view of a base fabric according to alternative example arrangements of the present invention that does not fall within the scope of the claims.
Figure 25 is an exemplary section view of a base fabric according to alternative example arrangements of the present invention that does not fall within the scope of the claims.
Figure 26 is a top view of a triple layer base fabric according to alternative embodiments of the invention.
Figure 27 is a top view of the bottom layer of the fabric of Figure 26.
Figure 28 is a section view of the base fabric of Figure 26 taken along lines 28-28 thereof.
Figure 29 is a section view of a base fabric according to alternative embodiments of the present invention.

### Detailed Description of Embodiments of the Invention

The present invention will now be described more fully hereinafter, in which embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, like numbers refer to like elements throughout. Thicknesses and dimensions of some components may be exaggerated for clarity.

As used herein, the terms "machine direction" (MD) and "cross machine direction" (CMD) refer, respectively, to a direction aligned with the direction of travel of the papermakers' fabric on a papermaking machine, and a direction parallel to the

fabric surface and transverse to the direction of travel. Also, both the flat weaving and endless weaving methods described hereinabove are well known in this art, and the term "endless belt" as used herein refers to belts made by either method.

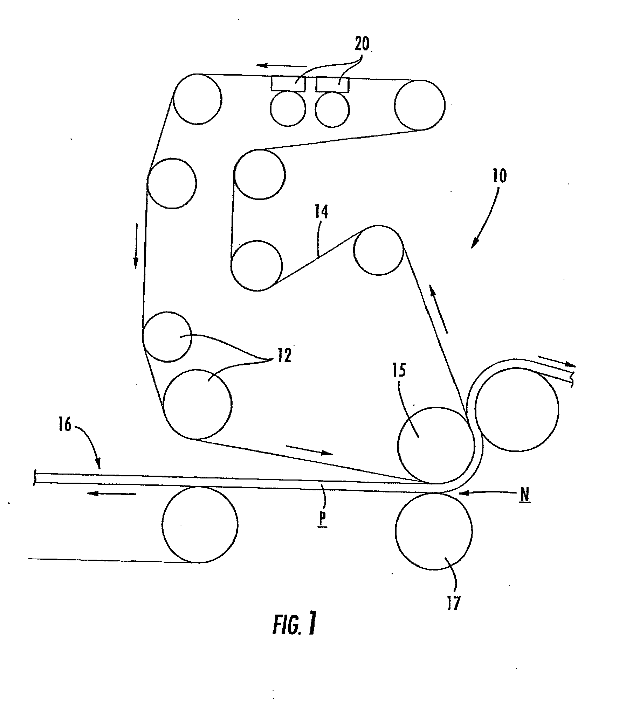

Referring now to the figures, a papermaking machine press section, designated broadly at 10, is illustrated in Figure 1. The press section 10 includes a press felt 14 that is installed upon and conveyed by a set of rolls 12, In its travel, the felt 14 travels over a press roll 15. An opposed press roll 17 is positioned so that, in conjunction with the felt 14 and press roll 15, it forms a nip N between the press rolls 15 and 17.

In operation, a paper web P is conveyed from a forming section 16 through the nip N formed by the press rollers 15, 17, wherein pressure is applied to the paper web P by the press rolls 15, 17. The pressure forces moisture from the paper web P that is absorbed by the felt 14. As the felt 14 is conveyed around its roll set 12, moisture is removed from the felt 14 and conditioned by one or more suction boxes 20.

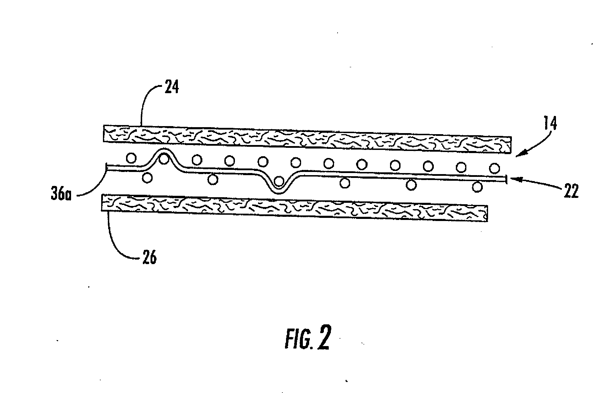

Figure 2 illustrates a cross-section of the felt 14 according to an example arrangement that does not fall within the scope of the claims. As can be seen in the aforementioned figures, the felt 14 includes a base fabric layer 22 (described in much greater detail below) and two batt layers: a machine side batt layer 24 and a paper side batt layer 26. Illustratively and preferably, these batt layers 24, 26 are attached to the base fabric layer 22 through a needling process, although other attachment techniques, such as heat bonding and adhesives, can also be used with the present invention. The machine side and paper side batt layers 24, 26 should be formed of material, such as a synthetic fiber like acrylic, aramid, polyester, or nylon, or a natural fiber such as wool, that assists in wicking water away from the base fabric layer 22. Preferred materials for the batt layers 24, 26 include polyamide, polyester and blends thereof. The weight and thickness of the batt layers 24, 26 can vary, although it is preferable that the ratio of batt weight to fabric weight is about between about 0.5 and 2.0, with 1.0 being more preferred. Also, in some exemplary arrangements, it may be desirable to have additional batt layers or to omit either of the batt layers 24, 26.

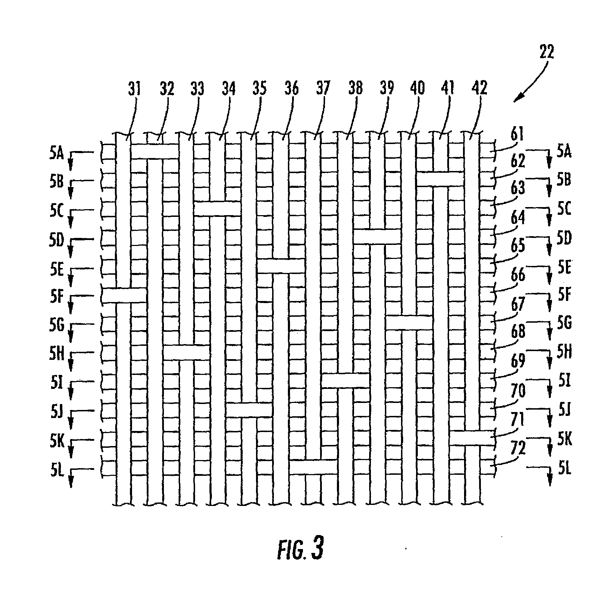

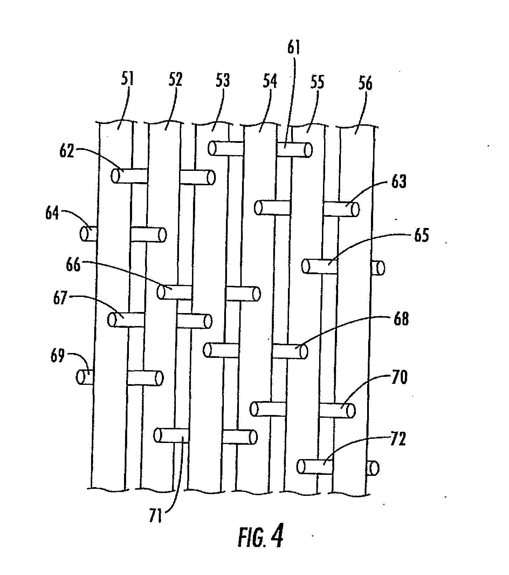

Figure 3 illustrates a repeat unit of the top, or papermaking, surface of the duplex base fabric 22, and Figure 4 illustrates a corresponding repeat unit the bottom layer of the base fabric 22 as seen from above. The base fabric 22 includes twelve top MD yarns 31-42, six bottom MD yarns 51-56, and twelve CMD yarns 61-72. The interweaving of these yarns is described below.

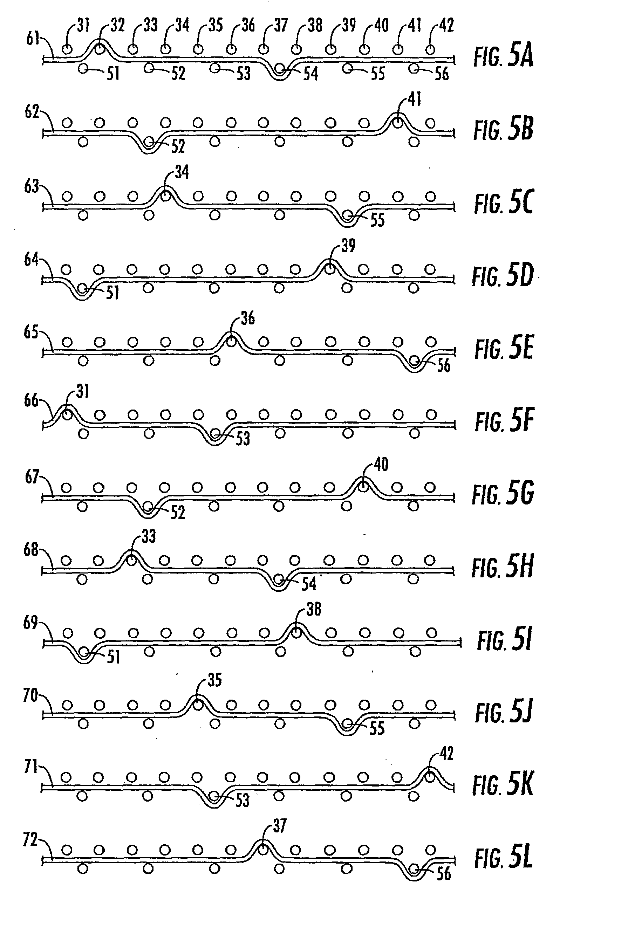

As can be seen in Figures 5A-5L, each of the CMD yarns 61-72 interweaves in an "over 1/under 11" pattern with respect to the top MD yarns 31-42. For example, CMD yarn 66 passes over top MD yarn 31, then passes below each of the other top MD yarns 32-42. Within the same weaving sequence, each CMD yarn 61-72 also interweaves in an "over 5/under 1" pattern with the bottom MD yarns 51-56. This is exemplified by CMD yarn 66, which passes above bottom MD yarns 51 and 52, below bottom MD yarn 53, and above bottom MD yarns 54-56 (bottom yarns 51, 52 and 54-56 are consecutive in adjoining repeat units and combine to form the "over 5 portion of the CMD yarn sequence). In the exemplary arrangement that does not fall within the scope of the claims as illustrated in Figures 5A-5L, each CMD yarn, after passing over a top MD yarn, follows one of two paths. In the case of CMD yarns 61, 63, 65, 67, 69, 71, each of these CMD yarns passes under the next five adjacent top MD yarns and over the next two adjacent bottom MD yarns before passing below a bottom MD yarn as part of the weaving pattern. Thus, CMD yarn 61 passes over top MD yarn 32, then passes below top MD yarns 33-37 as it passes over bottom MD yarns 52 and 53, then passes below bottom MD yarn 54 before passing above the remaining bottom MD yarns and the below the remaining top MD yarns. In the case of CMD yarns 62, 64, 66, 68, 70, 72, each of these CMD yarns passes below the next four top MD yarns and the next two bottom CMD yarns before passing below a bottom MD yarn. Thus, CMD yarn 66 passes over top MD yarn 31, below top MD yarns 32-35 as it passes over bottom MD yarns 51 and 52, then passes below bottom MD yarn 53 before passing above the remaining bottom MD yarns and below the remaining top MD yarns. The offset between adjacent CMD yarns is between 3 and 7 top MD yarns, with the offset typically being an odd number of top MD yarns.

Returning now to Figure 3, it can be observed that the top surface of the fabric 22 includes long MD floats ("floats" are segments of yarns that pass either entirely over or entirely under multiple adjacent perpendicular yarns; therefore, "MD floats" are segments of MD yarns that pass either entirely over or under multiple adjacent CMD yarns). As used herein, "long MD floats" are MD floats that pass over or under at least five consecutive CMD yarns. "Long paper side MD floats" are long MD floats that pass over at least five consecutive CMD yarns on the papermaking surface, and "long machine side MD floats" are MD floats that pass under at least five consecutive CMD yarns on the machine surface of the fabric.

The use of the base fabric 22 in the felt 14 can provide a desirable balance of properties. Felts with such base fabrics can exhibit sound sheet quality and consistent operability. The long paper side MD floats can provide uniform pressure support to the paper sheet, which can result in improved sheet quality and high drainage performance. On the machine side of the fabric, long MD floats can reduce the effect of "false air" during dewatering of the felt and paper sheets over suction rolls and suction boxes, which can in turn increase drainage and enhance conditioning of the felt. Because the long floats are bound to the base fabrics, they tend to resist collapse (unlike non-woven designs), and long MD floats on the paper side of the fabric provide relatively few knuckles that can cause marking of the paper sheet.

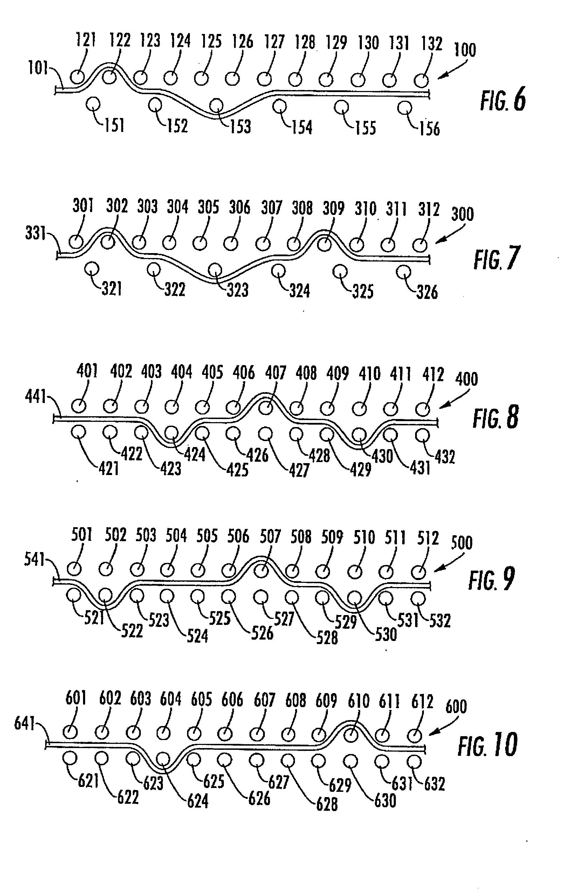

Other duplex fabrics having long MD floats may also be suitable for use with the present invention. For example, **Figure 6** illustrates a typical CMD yarn **101** for use in a duplex fabric **100.** The fabric **100** differs from the fabric **22** in the interweaving of the CMD yarns with the top and bottom MD yarns. As illustrated in **Figure 6****,** CMD yarn **101** passes over a top MD yarn **122,** then passes under three top MD yarns **123-125** and over one bottom MD yarn **152** before passing under bottom MD yarn **153.** CMD yarn **101** then passes above bottom MD yarns **154-156** and **151** and below MD yarns **126-132** and **121.** As with the fabric 22, the offset between adjacent CMD yarns is typically between three and seven top MD yarns.

A further embodiment of a duplex fabric that is suitable for use in press felts of the present invention is illustrated in **Figure 7** and designated broadly at **300.** The fabric 300 includes twelve top MD yarns **301-312,** six bottom MD yarns **321-326,** and six CMD yarns (only one CMD yarn **331** is shown herein). Rather than following the "over 1/under 12" sequence of the embodiments **of** **Figures 1-7****,** CMD yarn **331** of the fabric **300** weaves in an "over 1/under 6/over 1/under 4" sequence with top MD yarns **301-312,** and in an "over 5/under 1" sequence with bottom MD yarns **321-326.** In the illustrated embodiment, CMD yarn **331** passes below the bottom MD yarn **323** that is substantially "centered" between the paper side MD knuckles formed by the CMD yarn **331** over top MD yarns **302** and **309** (i.e., between paper side knuckles, CMD yarn **331** passes above one bottom MD yarn **322,** below one bottom MD yarn **323,** above one bottom MD yarn **324).** Adjacent CMD yarns may be offset from each other in the manner described above for the embodiment of **Figures 3-5L****.**

**Figure 8** illustrates a duplex fabric 400 that includes twelve top MD yarns **401-412,** twelve bottom MD yarns **421-432,** and twelve CMD yarns (only one CMD yarn **441** is illustrated herein). CMD yarn **441** interweaves with top MD yarns **401-412** in an "over 1/under 11" sequence and with bottom MD yarns **421-432** in an "over 5/under 1/over 5/under 1" sequence. As can be seen in **Figure 8****,** the paper side knuckle formed by CMD yarn **441** as it passes over top MD yarn **407** is substantially centered between the machine side knuckles formed as CMD yarn **441** passes below bottom MD yarns **424** and **430.** In this embodiment, adjacent CMD yarns may be offset from each other as described above.

Variations of the duplex fabric of **Figure 8** are illustrated in **Figures 9** and **10. Figure 9** illustrates a fabric **500** that includes twelve top MD yarns **501-512,** twelve bottom MD yarns **521-532,** and twelve CMD yarns (only one CMD yarn **541** is shown herein). CMD yarn **541** interweaves with the top MD yarns **501-512** in an "over 1/under 11" sequence and with the bottom MD yarns **521-532** in an "over 7/under 1/over 3/under 1" sequence. **Figure 10** illustrates a fabric **600** in which twelve CMD yarns (exemplified by CMD yarn **641)** interweaves with top MD yarns **601-612** in an "over 1/under 11" sequence and with bottom MD yarns **621-632** in an "over 11/under 1" sequence. In these embodiments, adjacent CMD yarns may be offset from one another as described above.

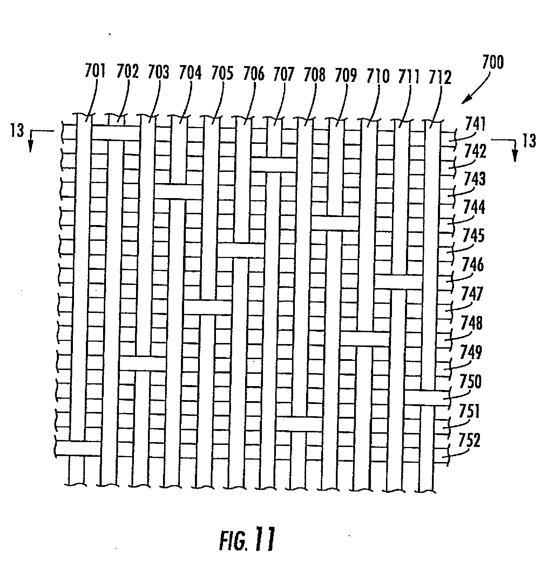

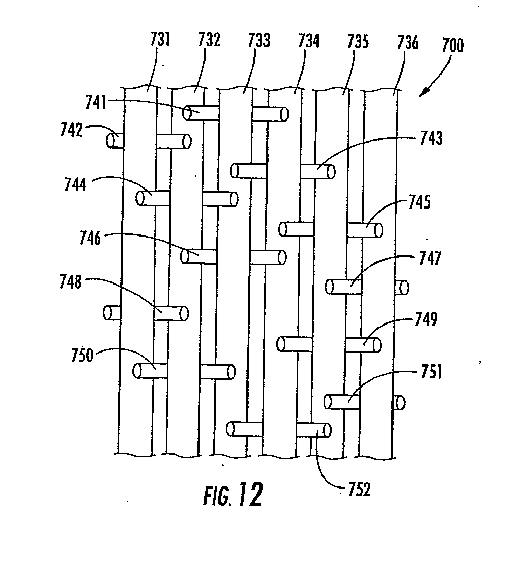

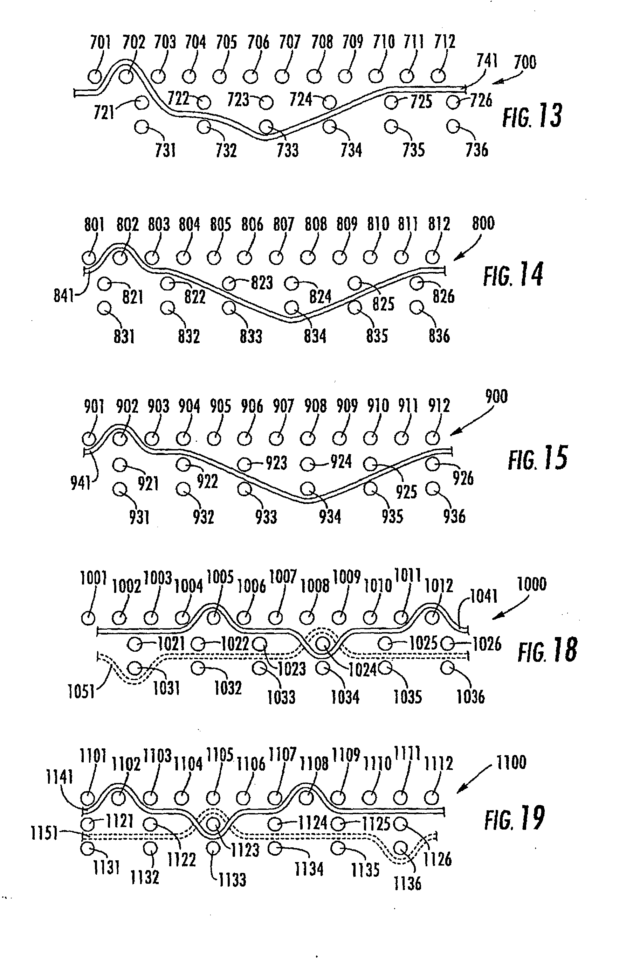

In addition to the duplex fabrics illustrated in **Figures 3-10****,** press felts of the present invention may also employ triplex fabrics. An example of one such triplex fabric is illustrated in **Figures 11-13** and designated broadly at **700.** The fabric **700** includes twelve top MD yarns **701-712,** six intermediate MD yarns **721-726,** six bottom MD yarns **731-736,** and twelve CMD yarns **741-752.** Each CMD yarn interweaves with the top MD yarns **701-712** in an "over 1/under I pattern", and with the bottom MD yarns **731-736** in an "over 5/under 1" pattern. As can be seen in **Figure 13****,** CMD yarn **741** interweaves with the intermediate MD yarns **721-726** in an "over 3/under 3" sequence, with CMD yarn **741** interweaving with a top MD yarn (top MD yarn **702** in **Figures 11** and **13****)** as it passes over intermediate yarns **725, 726, 721** and interweaving with a bottom MD yarn (bottom MD yarn **733** in **Figures 11** and **13****)** as it passes below intermediate yarns **722-724).** In an alternative but similar fabric 800 shown in **Figure 14****,** after passing above top MD yarn **802,** CMD yarn **841** passes above only one intermediate yarn **822** before passing below intermediate MD yarns **823-825** and interweaving below bottom MD yarn **834** (CMD yarn **841** also passes below top MD yarns **803-812** and **801,** above bottom MD yarns **831-833** and **835-836,** and above intermediate MD yarns **826** and **821).** For both of these fabric embodiments, adjacent CMD yarns may be offset from each other as described above.

It should be noted in **Figure 14** that the intermediate MD yarns **821-826** and bottom MD yarns **831-836** are vertically stacked (i.e. each intermediate MD yarn **821-826** is positioned directly above a corresponding bottom MD yarn **831-836),** and that these stacks of yarns are positioned between two top MD yarns **801-812.** **Figure 15** illustrates a fabric **900** in which CMD yarn **941** has the identical interweaving sequence as the fabric **800** of **Figure 14****,** but the intermediate MD yarns **921-926** and the bottom MD yarns **931-936** are not only vertically stacked with each other, but also are vertically stacked below a corresponding top MD yarn **901-912.** Those skilled in this art will appreciate that a fabric may be woven that follows the weaving pattern of fabric **700** with the intermediate and bottom MD yarns vertically stacked below a corresponding top MD yarn, or other fabric embodiments may be woven in which the intermediate and bottom MD yarns are not vertically stacked.

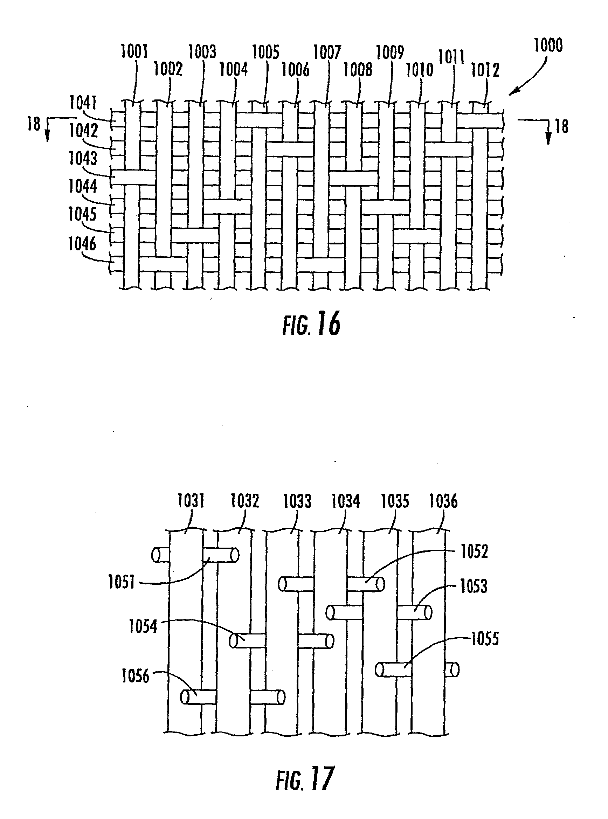

**Figures 16-18** illustrate an additional triplex fabric designated broadly therein at **1000.** The fabric **1000** includes twelve top MD yarns **1001-1012,** six intermediate MD yarns **1021-1026,** six bottom MD yarns **1031-1036,** six upper CMD yarns **1041-1046,** and six lower CMD yarns **1051-1056.** Each upper CMD yarn **1041-1046** interweaves with the top MD yarns **1001-1012** in an "over 1/under 6/over 1/under 4" sequence, and further interweaves with the intermediate MD yarns in an "over 5/under 1" sequence. In the illustrated embodiment, the intermediate MD yarn **1024** under which the upper CMD yarn **1041** weaves is "centered" between the top side knuckles formed by the upper CMD yarn **1041** as it passes over top MD yarns **1005,1012** (the intermediate and bottom MD yarns are vertically stacked with one another, but are located in interstices between the top MD yarns). In addition, lower CMD yarn **1051** interweaves with the intermediate MD yarns **1021-1026** in an "over 1/under 5" sequence and with the lower MD yarns **1031-1036** in an "over 5/under 1" sequence. The lower CMD yarn **1051** forms a knuckle above the intermediate MD yarn **1024** that is offset by three intermediate MD yarns from the intermediate MD yarn **1021** that is directly above the bottom MD yarn **1031** under which the lower CMD yarn **1051** forms a machine side knuckle. Also, it should be noted that lower CMD yarn **1051** passes over the same intermediate yarn **1024** that the upper CMD yarn **1041** passes under. Adjacent upper and lower CMD yarns can be offset from each other as described above.

Another fabric embodiment of the present invention is illustrated in Figure **19** and is designated broadly therein at **1100.** The fabric **1100** includes twelve top MD yarns **1101-1112,** six intermediate MD yarns **1121-1126,** six bottom MD yarns **1131-1136,** six upper CMD yarns (only upper CMD yarn **1141** is shown in **Figure 19****)** and six lower CMD yarns (only upper CMD yarn 1141 is shown in Figure 19) and six lower CMD yarns (only lower CMD yarn 1151 is shown in Figure 19). The fabric 1100 is very similar to the fabric 1000 illustrated in Figures 16-18; however, the intermediate and bottom MD yarns 1121-1126 and 1131-1136 are vertically stacked with each other and directly beneath a corresponding top MD yarn. Also, the upper CMD yarns (exemplified by lower CMD yarn 1141) interweave with the top MD yarns in an "over 1/under 5/over 1/under 5" sequence.

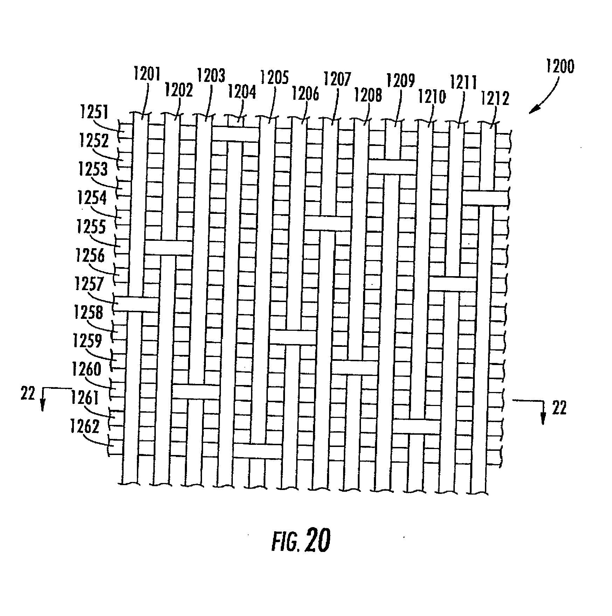

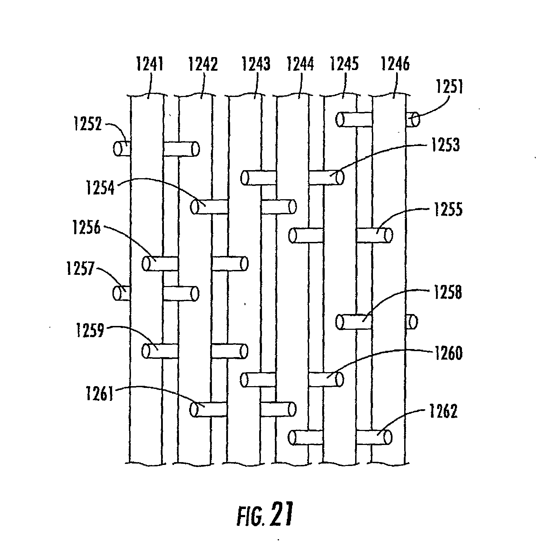

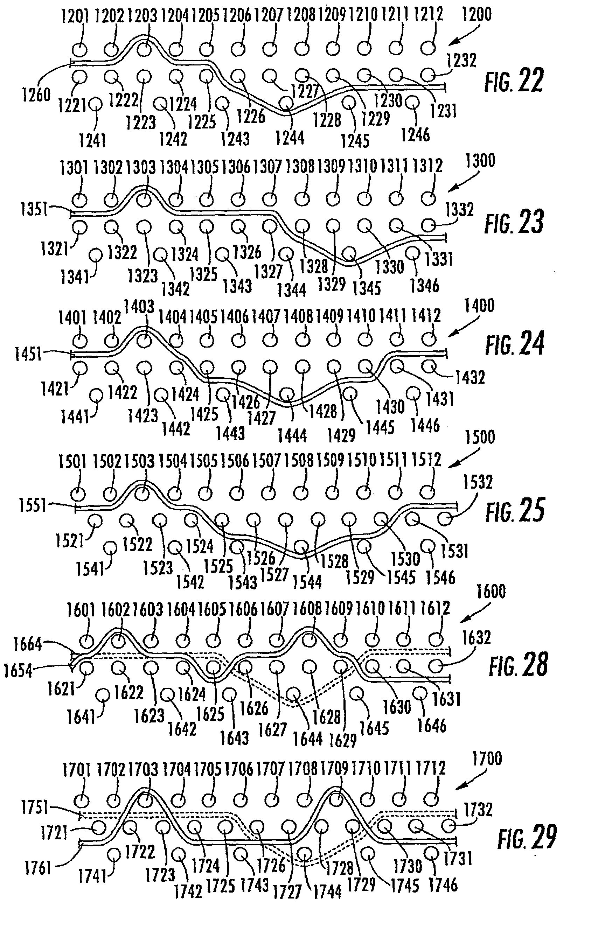

The triplex fabric of Figures 11-19 include equal numbers of intermediate and bottom MD yarns; however, fabric embodiments that have equal numbers of top and intermediate MD yarns are contemplated for use with the present invention. Figures 20-22 illustrate an exemplary arrangement that does not fall within the scope of the claims of such a triplex fabric designated broadly at 1200. The fabric 1200 includes twelve top MD yarns 1201-1212, twelve intermediate MD yarns 1221-1232, six bottom MD yarns 1241-1246, and twelve CMD yarns 1251-1262. In this embodiment, the intermediate MD yarns 1221-1232 are vertically stacked beneath the top MD yarns 1201-1212. The CMD yarns interweave with the top MD yarns 1201-1212 in an "over 1/under 11" sequence, with the intermediate MD yarns 1221-1232 in an "over 7/under 5" sequence, and with the bottom MD yarns 1231-1236 in an "over 5/under 1" sequence. Referring to Figure 22 as an example, after passing over top MD yarn 1203, CMD yarn 1260 passes over two intermediate MD yarns 1224, 1225; CMD yarn 1260 then passes below intermediate MD yarns 1226 and 1227 before passing below bottom MD yarn 1244. CMD yarn 1260 then passes below intermediate MD yarns 1228-1232 before passing above intermediate yarns 1221 and 1222 and traveling up to pass over top MD yarn 1203. In following this path, CMD yarn 1260 passes over bottom MD yarns 1241-1243 and 1245-1246.

Another triplex fabric exemplary arrangement that does not fall within the scope of the claims, designated broadly at 1300, is illustrated in Figure 23. Like the fabric 1200 described above, the fabric 1300 has twelve top MD yarns 1301-1312, twelve intermediate MD yarns 1321-1332, six bottom MD yarns 1341-1346, and twelve CMD yarns (only CMD yarn 1351 is shown in Figure 17). The fabric 1300 varies from the fabric 1200 described above in the path that the CMD yarn 1351 follows: after passing above top MD yarn 1303, CMD yarn 1351 passes above four intermediate MD yarns 1324-1327 before passing below intermediate MD yarns 1328-1332 and bottom MD yarn 1345. Figure 24 also depicts a similar fabric exemplary arrangement that does not fall within the scope of the claims. The fabric 1400 shown therein has twelve top MD yarns 1401-1412, twelve intermediate MD yarns 1421-1432, six bottom MD yarns **1441-1446,** and twelve CMD yarns (only CMD yarn **1451** is shown in **Figure 17****).** The fabric 1400 differs from the fabric 1300 in that CMD yarn **1451** follows an "over 6/under 6" sequence relative to the intermediate MD yarns. More specifically, CMD yarn **1451** passes above top MD yarn **1403,** above one intermediate MD yarn **1424,** below six intermediate MD yarns **1425-1430** as it passes below bottom MD yarn **1444,** and passes above six intermediate MD yarns **1431, 1432,** and **1421-1424** as it passes above top MD yarn **1403.** **Figure 25** shows a very similar fabric 1500, in which the twelve intermediate MD yarns **1521-1532** are located below the interstices formed by top MD yarns **1501-1512** rather than being vertically stacked beneath them. Each of the bottom MD yarns **1541-1546** are vertically stacked below one of the top MD yarns **1501-1512.** The CMD yarns (exemplified by CMD yarn **1551)** follow the same interweaving pattern with the top, intermediate and bottom MD yarns as does CMD yarn **1451** in the fabric **1400.**

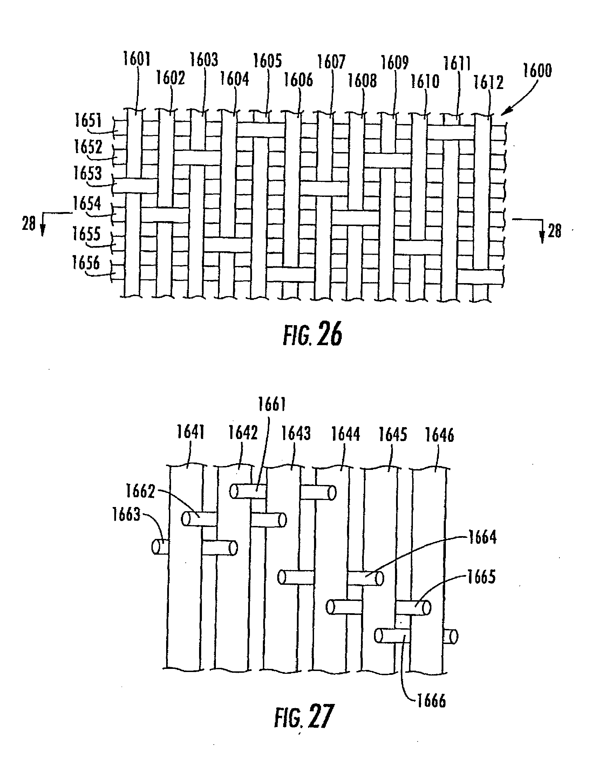

A further triplex fabric embodiment, designated broadly at **1600,** is illustrated in **Figures 26-28****.** The fabric **1600** includes twelve top MD yarns **1601-1612,** twelve intermediate MD yarns **1621-1632,** six bottom MD yarns **1641-1646,** six upper CMD yarns **1651-1656,** and six lower CMD yarns **1661-1666.** Each upper CMD yarn follows an "over 1/under 5/over 1/under 5" sequence with the top MD yarns **1601-1612** and an "over 4/under 1/over 4/under 3" sequence with the intermediate MD yarns **1621-1632.** Each lower CMD yarn follows an "over 8/under 4" sequence in interweaving with the intermediate MD yarns **1621-1632** and an "over 5/under 1" sequence relative to the bottom MD yarns 1641-**1646.** More specifically, as shown in **Figure 28****,** lower CMD yarn **1664** stitches below bottom MD yarn **1644,** which is located in a interstice adjacent top MD yarn **1608** that upper CMD yarn **1654** passes over. A similar fabric embodiment, designated broadly at **1700,** is illustrated in **Figure 29****.** The fabric **1700** also includes twelve top MD yarns **1701-1712,** twelve intermediate MD yarns **1721-1732,** six bottom MD yarns **1741-1746,** six upper CMD yarns (only upper CMD yarn **1751** is shown in **Figure 29****),** and six lower CMD yarns (only lower CMD yarn **1761** is shown in **Figure 29****).** However, the upper CMD yarn **1751** interweaves with the intermediate MD yarns **1721-1732** in an "over 2/under 4/over 2/under 4" sequence, with the upper CMD yarn **1751** passing over the top MD yarns (in this instance top MD yarns **1703,1709)** that are located in the space above the two intermediate MD yarns in the two "over 2" segments referenced above. The lower CMD yarns follow the same pattern as for fabric 1600 above.

It should be noted that, for the fabric embodiments that are illustrated in and described with respect to Figures 16-19 and 26-29, these fabrics are woven using two different warp beams. This enables two different CMD yarns to be woven to bind different; i.e., the upper CMD yarns can weave the top and intermediate MD yarns and the lower CMD yarns can weave the intermediate and bottom MD yarns. This configuration can also allow different yarn types to be used for the upper and lower CMD yarns dependent on the desired properties of the fabric.

It can be seen that each of the fabric embodiments illustrated and described with respect to Figures 6-29 have long MD floats. As such, each may provide the type of performance advantages discussed above in connection with the fabric 22 of Figures 3-5L.

Typically, the yarns employed in the base fabrics described above may be of any form (e.g., monofilament, multifilament, hybrid yarns, meltable monofilaments, and twists) known to be suitable for use in press felts, although monofilaments or twists are preferred, For the CMD yarns, 3- or 4-ply twisted monofilaments may be particularly suitable (especially 0.1 to 0.3 mm twisted monofilaments), as may monofilaments up to 1.0 mm, spun yarns, multiflaments, core-wrapped yarns or combinations thereof. MD yarns are typically twisted monofilaments, but monofilaments up to 1.0 mm, spun yarns, multifilaments, core-wrapped yarns and combinations may also be particularly suitable for use in the base fabrics of press felts of the invention.

## Claims

1. A papermaker's press felt, comprising:
an endless woven base fabric, comprising:
a set of top machine direction (MD) yarns;
a set of intermediate MD yarns;
a set of bottom MD yarns;
a set of upper cross machine direction (CMD) yarns interwoven with the top MD yarns and the intermediate MD yarns; and
a set of lower CMD yarns interwoven with the intermediate MD yarns and
the bottom MD yarns;
the press felt further comprising at least one batt layer attached to the base fabric;
**characterised in that**
the upper and lower CMD yarns of the fabric are woven from two different warp beams, the upper CMD yarns from a first warp beam being of a first type, and the lower CMD yarns from a second warp beam being of a second type that is different from the first type and wherein the top MD yarns, intermediate MD yarns, bottom MD yarns, upper CMD yarns and
lower CMD yarns are interwoven in a series of repeat units in which each top MD yarn forms a long MD paper side float that passes above at least five consecutive ones of the upper CMD yarns.

2. The press felt defined in claim 1, wherein each of the upper CMD yarns forms two paper side knuckles in the repeat unit.

3. The press felt defined in claim 1, wherein each of the lower CMD yarns forms only one machine side knuckle in the repeat unit.

4. The press felt defined in claim 1, wherein the set of intermediate MD yarns and the set of bottom MD yarns include the same numbers of yarns.

5. The press felt defined in claim 1, wherein the set of intermediate MD yarns and the set of top MD yarns include the same numbers of yarns.

6. A method of producing a papermaker's press felt, comprising the steps of:
(a) endless weaving a base fabric, the base fabric including:
a set of top machine direction (MD) yarns;
a set of intermediate MD yarns;
a set of bottom MD yarns;
a set of upper cross machine direction (CMD) yarns interwoven with the top MD yarns and the intermediate MD yarns; and
a set of lower CMD yarns interwoven with the intermediate MD yarns and the bottom MD yarns;
wherein the upper CMD yarns are woven using a first warp beam of a loom, and the lower CMD yarns are woven using a second warp beam of the loom, the second warp beam being different than the first warp beam; and
wherein the top MD yarns, intermediate MD yarns, bottom MD yarns, upper CMD yarns and lower CMD yarns are interwoven in a series of repeat units in which each top MD yarn forms a long MD paper side float that passes above at least five consecutive ones of the upper CMD yarns;
(b) needling a batt layer onto the base fabric to from a press felt.

7. The method defined in claim 6, wherein the upper CMD yarns are of a first type, and the lower CMD yarns are of a second type that differs from the first type.

## Patentansprüche

1. Papiermaschinenpressfilz, umfassend:
ein endlos verwebtes Grundgewebe, welches umfasst:
einen Satz von oberen Maschinenrichtungsfäden (MD-Fäden);
einen Satz von zwischengesetzten MD-Fäden;
einen Satz von unteren MD-Fäden;
einen Satz von oberen Quermaschinenrichtungsfäden (CMD-Fäden), die mit den oberen MD-Fäden und den zwischengesetzten MD-Fäden verwebt sind; und
einen Satz von unteren CMD-Fäden, welche mit den zwischengesetzten MD-Fäden und den unteren MD-Fäden verwebt sind;
wobei der Pressfilz ferner mindestens eine Faserflorschicht umfasst, die an das Grundgewebe gebunden ist;
**dadurch gekennzeichnet, dass**
die oberen und unteren CMD-Fäden des Gewebes von zwei unterschiedlichen Kettbäumen verwebt sind, nämlich die oberen CMD-Fäden von einem ersten Kettbaum, welcher von einem ersten Typ ist, und die unteren CMD-Fäden von einem zweiten Kettbaum, welcher von einem zweiten Typ ist, welcher sich von dem ersten Typ unterscheidet, und wobei die oberen MD-Fäden, die zwischengesetzten MD-Fäden, die unteren MD-Fäden, die oberen CMD-Fäden und die unteren CMD-Fäden in einer Reihe von Rapporteinheiten verwebt sind, in denen jeder obere MD-Faden einen langen MD-papierseitigen flottierenden Faden bildet, der über wenigstens fünf aufeinanderfolgenden Fäden der oberen CMD-Fäden verläuft.

2. Pressfilz nach Anspruch 1, wobei jeder der oberen CMD-Fäden zwei papierseitige Schlaufen in der Rapporteinheit bildet.

3. Pressfilz nach Anspruch 1, wobei jeder der unteren CMD-Fäden lediglich eine maschinenseitige Schlaufe in der Rapporteinheit bildet.

4. Pressfilz nach Anspruch 1, wobei der Satz von zwischengesetzten MD-Fäden und der Satz von unteren MD-Fäden die gleiche Anzahl von Fäden umfassen.

5. Pressfilz nach Anspruch 1, wobei der Satz von zwischengesetzten MD-Fäden und der Satz von oberen MD-Fäden die gleiche Anzahl von Fäden umfassen.

6. Verfahren zum Herstellen eines Papiermaschinenpressfilzes, welches die Schritte umfasst:
(a) endlos Verweben eines Grundgewebes, wobei das Grundgewebe umfasst:
einen Satz von oberen Maschinenrichtungsfäden (MD-Fäden);
einen Satz von zwischengesetzten MD-Fäden;
einen Satz von unteren MD-Fäden;
einen Satz von oberen Quermaschinenrichtungsfäden (CMD-Fäden), die mit den oberen MD-Fäden und den zwischengesetzten MD-Fäden verwebt sind; und
einen Satz von unteren CMD-Fäden, welche mit den zwischengesetzten MD-Fäden und
den unteren MD-Fäden verwebt sind;
wobei die oberen CMD-Fäden unter Verwendung eines ersten Kettbaums von einem Webstuhl verwebt werden, und die unteren CMD-Fäden unter Verwendung eines zweiten Kettbaums des Webstuhls verwebt werden, wobei sich der zweite Kettbaum von dem ersten Kettbaum unterscheidet; und
wobei die oberen MD-Fäden, die zwischengesetzten MD-Fäden, die unteren MD-Fäden,
die oberen CMD-Fäden und die unteren CMD-Fäden in einer Reihe von Rapporteinheiten verwebt sind, in denen jeder obere MD-Faden einen langen MD-papierseitigen flottierenden Faden bildet, der über wenigstens fünf aufeinanderfolgenden Fäden der oberen CMD-Fäden verläuft;
(b) Vernähen einer Faserflorschicht an das Grundgewebe, um einen Pressfilz herzustellen.

7. Verfahren nach Anspruch 6, bei welchem die oberen CMD-Fäden von einem ersten Typ sind, und die unteren CMD-Fäden von einem zweiten Typ sind, welcher sich von dem ersten Typ unterscheidet.

## Revendications

1. Feutre de presse d'une machine de fabrication de papier comprenant :
un tissu de base tissé sans fin, comprenant :
un ensemble de fils supérieurs dans le sens machine (MD) ;
un ensemble de fils intermédiaires MD ;
un ensemble de fils inférieurs MD ;
un ensemble de fils supérieurs dans le sens travers (CMD) entrelacés avec les fils supérieurs MD et les fils intermédiaires MD ; et
un ensemble de fils inférieurs CMD entrelacés avec les fils intermédiaires MD et les fils inférieurs MD ;
le feutre de presse comprenant en outre au moins une couche de nappage fixée sur le tissu de base ;
**caractérisé en ce que** :
les fils supérieurs et inférieurs CMD du tissu sont tissés à partir de deux ensouples de chaîne différentes, les fils supérieurs CMD d'une première ensouple de chaîne étant d'un premier type, et les fils inférieurs CMD d'une seconde ensouple de chaîne étant d'un second type qui est différent du premier type, et dans lequel les fils supérieurs MD, les fils intermédiaires MD, les fils inférieurs MD, les fils supérieurs CMD et les fils inférieurs CMD sont entrelacés dans une série d'unités de répétition dans lesquelles chaque fil supérieur MD forme un long flotté du côté du papier MD qui passe sur au moins cinq fils consécutifs des fils supérieurs CMD.

2. Feutre de presse selon la revendication 1, dans lequel chacun des fils supérieurs CMD forme deux croisements du côté du papier dans l'unité de répétition.

3. Feutre de presse selon la revendication 1, dans lequel chacun des fils inférieurs CMD ne forme qu'un seul croisement du côté de la machine dans l'unité de répétition.

4. Feutre de presse selon la revendication 1, dans lequel l'ensemble de fils intermédiaires MD et l'ensemble de fils inférieurs MD comprennent le même nombre de fils.

5. Feutre de presse selon la revendication 1, dans lequel l'ensemble de fils intermédiaires MD et l'ensemble de fils supérieurs MD comprennent le même nombre de fils.

6. Procédé pour produire un feutre de presse d'une machine de fabrication de papier, comprenant les étapes consistant à :
(a) tisser sans fin un tissu de base, le tissu de base comprenant :
un ensemble de fils supérieurs dans le sens machine (MD) ;
un ensemble de fils intermédiaires MD ;
un ensemble de fils inférieurs MD ;
un ensemble de fils supérieurs dans le sens travers (CMD) entrelacés avec les fils supérieurs MD et les fils intermédiaires MD ; et
un ensemble de fils inférieurs CMD entrelacés avec les fils intermédiaires MD et les fils inférieurs MD ;
dans lequel les fils supérieurs CMD sont tissés en utilisant une première ensouple de chaîne d'un métier à tisser, et les fils inférieurs CMD sont tissés en utilisant une seconde ensouple de chaîne du métier à tisser, la seconde ensouple de chaîne étant différente de la première ensouple de chaîne ; et
dans lequel les fils supérieurs MD, les fils intermédiaires MD, les fils inférieurs MD, les fils supérieurs CMD et les fils inférieurs CMD sont entrelacés dans une série d'unités de répétition dans lesquelles chaque fil supérieur MD forme un flotté long du côté du papier MD qui passe sur au moins cinq fils consécutifs des fils supérieurs CMD ;
(b) coudre une couche de nappage sur le tissu de base afin de former un feutre de presse.

7. Procédé selon la revendication 6, dans lequel les fils supérieurs CMD sont d'un premier type, et les fils inférieurs CMD sont d'un second type qui est différent du
